# EUROPÄISCHE PATENTSCHRIFT

(11) **EP 1 594 368 B1**
(45) Veröffentlichungstag und Bekanntmachung des Hinweises auf die Patenterteilung: **31.12.2008**
(21) Anmeldenummer: 04711589.4
(22) Anmeldetag: 17.02.2004
(51) Int. Cl.: A23L 1/19

(54) **ZUSAMMENSETZUNG DIE SICH ALS SAHNEERSATZ EIGNET SOWIE VERFAHREN ZU DEREN HERSTELUNG**
COMPOSITION THAT IS SUITABLE AS A CREAM SUBSTITUTE AND METHOD FOR THE PRODUCTION THEREOF
COMPOSITION POUVANT REMPLACER LA CREME ET SON PROCEDE DE PRODUCTION

(30) Priorität: 17.02.2003 DE 10306574
(43) Veröffentlichungstag der Anmeldung: 16.11.2005
(73) Patentinhaber: LeHa Lebensmittel Hartung GmbH, 06636 Laucha (DE)
(72) Erfinder: HARTUNG, Marko, 06647 Bad Bibra OT Wallroda (DE)
(74) Vertreter: Engelhard, Markus
(86) Internationale Anmeldenummer: PCT/EP2004/001491
(87) Internationale Veröffentlichungsnummer: WO 2004/071215

(56) Entgegenhaltungen:
- GB-A- 1 066 703
- US-A- 4 088 792
- US-A- 5 084 295
- US-A- 5 968 583

## Beschreibung

Die vorliegende Erfindung betrifft eine Zusammensetzung, die sich als Sahneersatz eignet, sowie ein Verfahren zu deren Herstellung.

Sahne ist der fettreiche Bestandteil von Milch, insbesondere Kuhmilch, der sich beim Stehenlassen der Milch an der Oberfläche ansammelt. Sahne wird in der Regel weiterverarbeitet, beispielsweise zu Butter, oder direkt konsumiert. Es gibt zahlreiche Sahneerzeugnisse, die sich durch Herstellungprozeß, die Fettstufen und im Geschmack unterscheiden, wie zum Beispiel Creme Double. Creme Double ist eine besonders fettreiche (>43%), süß-löffelfeste Sahne, die bei der Verfeinerung von gekochten Gerichten ihre Anwendung findet.

Aufgrund ihres tierischen Ursprungs enthält herkömmliche Sahne einen hohen Anteil an gesättigten Fettsäuren und Cholesterin. Darüber hinaus sind in Sahne nicht-vemachlässigbare Anteile von Milchzucker enthalten. Gesättigte Fettsäuren können vom menschlichen Körper selbst hergestellt werden, müssen also nicht unbedingt mit der Nahrung zugeführt werden. Cholesterin wird als einer der hauptursächlichen Faktoren für die Entstehung von Arteriosklerose verantwortlich gemacht. Insofern ist das Vorkommen von Cholesterin in Lebensmittel für Menschen, die auf eine gesunde Ernährungsweise bedacht sind, unerwünscht. Gegen Lactose besteht in zunehmendem Maße in Teilen der asiatischen, aber auch der europäischen Bevölkerung eine Unverträglichkeit, die sich in einer Unfähigkeit äußert, lactosehaltige Lebensmittel zu verdauen. Schwere Durchfälle und Resorptionsschwierigkeiten können die Folge sein.

GB 1,066,703 beschreibt ein Konzentrat einer Sahneersatz-Zusammensetzung, die eine stabile, visköse flüssige Zusammensetzung ist, die 40-70% Fett, bestehend aus Pflanzenfett, 20-50% Wasser, 10-40% eines oder mehrerer Zucker, wie Dextrose oder Sucrose, und mindestens 3 emulgierende Mittel enthält. Bei den emulgierenden Mitteln handelt es sich um (i) Mittel mit einer starken Affinität für die Wasser/Luft-Grenzfläche (Bsp. Cellulose, Cellulose-Ether und - Ester, mikrokristalline Cellulose), (ii) Mittel mit einer starken Affinität für die Wasser/Fett-Grenzfläche (Bsp. Polyoxyethylen-Sorbitol-Derivate) und (iii) lipophile emulgierende Mittel (Bsp. Monoglyceride von Fettsäuren). Das Konzentrat wird vor der Verwendung mit der gleichen Menge Wasser versetzt. Es werden Zusammensetzungen beschrieben, die alle einen hohen Zuckeranteil (Dextrose und einmal zusätzlich Sucrose) für eine verbesserte Haltbarkeit aufweisen. Weiterhin werden tierisches Fett, wie Butterfett, und Milchpulver, das Lactose enthält, als Bestandteile des Konzentrats verwendet.

US 5,968,583 beschreibt die Verwendung von eßbaren Surfaktanten als Fett- und Glyzerin-Ersatz in Zusammensetzungen für Keksfüllungen und Zuckergüsse ("frostings"). Auch US 5,968,583 lehrt die Verwendung von großen Mengen an Zucker, wie Sucrose, Dextrose, Fructose, Lactose, im Bereich von 0-90 Gew.-%, bevorzugt 30-90 Gew.-%.

Sahne wird jedoch in vielerlei Form zur Herstellung von Lebensmitteln bzw. bei der Zubereitung von Speisen benötigt. Soßen werden durch die Zugabe von Sahne verfeinert etc.

Daher ist es eine Aufgabe der vorliegenden Erfindung eine Zusammensetzung bereitzustellen, die sich gleichermaßen wie Sahne zum kulinarischen Einsatz in der Küche eignet, ohne jedoch die vorgenannten nicht gesundheitsfördernden Substanzen zu enthalten. Weiterhin ist es eine Aufgabe der Erfindung, eine Zusammensetzung bereitzustellen, die sich ebenso zum Verfeinern von Speisen, dem Anschäumen von Desserts etc. eignet, ohne dabei jedoch die der vorliegenden Erfindung, eine kalorienärmere Alternative zur Sahne bereitzustellen, die hinsichtlich ihrer übrigen Eigenschaften, wie Standfestigkeit und Bindeeigenschaften, herkömmlicher Sahne gleichkommt oder diese sogar übertrifft.

Es ist weiterhin eine Aufgabe der vorliegenden Erfindung eine Zusammensetzung bereitzustellen, die sich insbesondere zum Einsatz bei bestehenden Nahrungsmittelunverträglichkeiten gegen Laktose und/oder Milcheiweiß eignet.

Diese Aufgaben werden gelöst durch eine Zusammensetzung gemäß Anspruch 1. Dabei ist vorgesehen, daß die Zusammensetzung mindestens eine Sorte pflanzliches Fett, mindestens ein Feuchthaltemittel, mindestens einen Füllstoff, mindestens einen Stabilisator, mindestens ein Mittel zur Verbesserung der rheologischen und kalorischen Eigenschaften der Zusammensetzung, sowie Wasser umfaßt.

Die erfindungsgemäße Zusammensetzung enthält zusätzlich mindestens eine Sorte Eiweiß und mindestens eine Sorte Mono- und/oder Di-Glycerid.

Es wird bevorzugt, daß die mindestens eine Sorte pflanzliches Fett ausgewählt ist aus der Gruppe Palmfett.

In einer Ausführungsform ist der mindestens eine Stabilisator ausgewählt aus der Gruppe, umfassend Carrageen, Guarkernmehl, Natriumcitrat, Kaliumorthophosphat, Cellulose, Carboxymethylcellulose und Xanthan.

Das mindestens eine Feuchthaltemittel ist eine Polyhydroxyverbindung, die ausgewählt ist aus der Gruppe, umfassend Sorbit, 1,2-Propandiol und Glycerin.

In einer Ausführungsform ist der mindestens eine Füllstoff ein Kohlenhydrat, wobei, bevorzugt, das Kohlenhydrat eine Polydextrose ist.

In einer Ausführungsform ist das mindestens eine Mittel zur Verbesserung der rheologischen und kalorischen Eigenschaften der Zusammensetzung ausgewählt aus der Gruppe, umfassend Maltodextrin, Saccharosepolyester, Cellulose, insbesondere mikrokristalline Cellulose und mikropartikuliertes Protein.

Unter einem Mittel zur Verbesserung der rheologischen und kalorischen Eigenschaften der Zusammensetzung", wie hierin verwendet, ist ein Mittel zu verstehen, das der Zusammensetzung eine sahneartige Konsistenz verleiht, ohne dabei jedoch wesentlich zum physiologischen Brennwert der Zusammensetzung beizutragen.

Unter "mikropartikuliertem Protein" ist ein speziell behandeltes Protein zu verstehen, bei dem der mittlere Teilchenmesser zwischen 0,1 und 0,3 µm liegt. Ein kommerziell erhältliches Beispiel für ein solches mikropartikuliertes Protein ist das Produkt "Simplesse^{®}" der Firma The Nutra Sweet Company. Ein kommerziell erhältliches Beispiel für einen Saccharosepolyester ist das Produkt "Olestra^{®}" von Procter & Gamble.

Bevorzugt ist die mindestens eine Sorte Mono- und/oder Di-Glycerid ein Mono- und/oder DiGlycerid von Speisefettsäuren, verestert mit Essigsäure, Milchsäure, Citronensäure, Weinsäure, Monoacetyl-Weinsäure und/oder Diacetyl-Weinsäure.

Es wird bevorzugt, daß die mindestens eine Sorte Eiweiß ausgewählt ist aus der Gruppe, die Milcheiweiß, Sojaeiweiß und eine Kombination der beiden Eiweiße umfaßt.

In einer Ausführungsform umfaßt die erfindungsgemäße Zusammensetzung mindestens einen Aromastoff.

Die Bestandteile der erfindungsgemäßen Zusammensetzung liegen in folgenden Gewichtsbereichsmengen vor (Angaben in Gew.% der Gesamtzusammensetzung):
Pflanzliches Fett 10% - 20%
Eiweiß 0,1% - 1%
Feuchthaltemittel 0,1% - 2%
Mittel zur Verbesserung der rheologischen und kalorischen Eigenschaften 5% - 10%
Füllstoff 1% - 8%
Stabilisator 0,01% - 1%
Mono- und/oder Di-Glycerid 0,1 % - 2%

Wasser ad 100%, wobei, bevorzugter, die Bestandteile in folgenden Gewichtsbereichsmengen vorliegen (Angaben in Gew.% der Gesamtzusammensetzung):
Pflanzliches Fett 12% - 18%
Eiweiß 0,4% - 0,9%
Feuchthaltemittel 0,5% - 1,5%
Mittel zur Verbesserung der rheologischen und kalorischen Eigenschaften 7% - 9%
Füllstoff 3% - 6%
Stabilisator 0,1% - 0,9%
Mono- und/oder Di-Glycerid 0,2% - 1,5%
Wasser ad 100%.

Es wird bevorzugt, daß die mindestens eine Sorte pflanzliches Fett Palmfett ist, die mindestens eine Sorte Eiweiß Caseinat ist, das mindestens eine Feuchthaltemittel Sorbit ist, das mindestens eine Mittel zur Verbesserung der rheologischen und kalorischen Eigenschaften der Zusammensetzung Maltodextrin ist, der mindestens eine Füllstoff Polydextrose ist, der mindestens eine Stabilisator Carrageen, Guarkernmehl, Xanthan, Natriumcitrat, Kaliumorthophosphat, Cellulose und/oder Carboxymethylcellulose und/oder eine beliebige Kombination der vorgenannten Stoffe ist, die mindestens eine Sorte Mono- und/oder Di-Glycerid ein Mono- und/oder Di-Glycerid von Speisefettsäuren, verestert mit Essigsäure, Milchsäure, Citronensäure, Weinsäure, Monoacetyl-Weinsäure und/oder Diacetyl-Weinsäure ist.

In einer Ausführungsform liegen die Bestandteile in folgenden Gewichtsbereichsmengen vor (Angaben in Gew.% der Gesamtzusammensetzung):
Palmfett 14% - 16%
Caseinat 0,6% - 0,8%
Sorbit 0,8% - 1,2%
Maltodextrin 7% - 9%
Polydextrose 3% - 5%
Stabilisator 0,02% - 0,6%
Mono- und/oder Di-Glycerid 0,7% - 1,5%
Wasser ad 100%.

Als besonders vorteilhaft für das pflanzliche Fett haben sich Palmfette erwiesen.

Die erfindungsgemäße Zusammensetzung eignet sich für alle Zwecke, für die Sahne üblicherweise eingesetzt wird, d.h. zum Verfeinern von Speisen und Soßen, Aufschäumen von Desserts, als Schlagsahneersatz, als Kaffeeweißer etc.

Die Aufgaben der Erfindung werden ebenfalls gelöst durch ein Verfahren zum Herstellen einer Zusammensetzung gemäß Anspruch 15, umfassend die folgenden Schritte:
- Bereitstellen von mindestens einer Sorte pflanzliches Fett, mindestens einem Feuchthaltemittel, mindestens einem Füllstoff, mindestens einem Stabilisator, mindestens einem Mittel zur Verbesserung der rheologischen und kalorischen Eigenschaften, mindestens einer Sorte Eiweiß, mindestens einer Sorte Mono- und/oder Diglycerid, sowie Wasser,
- Herstellen einer Fettphase durch Mischen des Fetts mit der mindestens einen Sorte Mono-und/oder Diglycerid,
- Herstellen einer Wasserphase durch Mischen von Wasser mit dem mindestens einem Mittel zur Verbesserung der rheologischen und kalorischen Eigenschaften, der mindestens einen Sorte Eiweiß, dem mindestens einen Stabilisator, und mindestens einer Sorte Mono-und/oder Diglycerid, dem mindestens einen Füllstoff sowie dem mindestens einen Feuchthaltemittel,
- Mischen der Fettphase und der Wasserphase.

In einer Ausführungsform des erfindungsgemäßen Verfahrens wird bevorzugt, daß weiterhin Aromen zugegeben werden. Diese können während der Herstellung der einzelnen Phasen, oder im Anschluß beim Zusammenmischen der beiden Phasen zugegeben werden. In einer bevorzugten Ausführungsform wird die so gemäß dem erfindungsgemäßen Verfahren hergestellte Zusammensetzung weiteren Verarbeitungsschritten, wie Sterilisierung, Homogenisierung, Ultrahocherhitzung, etc. unterzogen. In einer Ausführungsform des erfindungsgemäßen Verfahrens wird das Fett vor Herstellung der Fettphase auf eine Temperatur im Bereich von 50-90°C, bevorzugt 60-80°C, besonders bevorzugt ca. 70°C erhitzt.

Die Erfindung wird nunmehr in der folgenden detaillierten Beschreibung dargestellt, die der Erläuterung, nicht der Beschränkung dienen soll.

### Beispiel 1

In einer Ausführungsform umfaßt die erfindungsgemäße Zusammensetzung folgende Bestandteile:

| | | | |
|---|---|---|---|
| 1. | POLAWAR 70 | -15.00 % | reines, gehärtetes Pflanzenfett (Palmfett) |
| 2. | NA - CASEINAT | - 0.70 % | Milcheiweiß |
| 3. | SORBIT | - 1.00 % | Feuchthaltemittel |
| 4. | MALTODEXTRIN | - 8.40 % | |
| 5. | LITESSE 2 POLYDEXTROSE | - 4.00 % | Kohlenhydrat (E 1200) |
| 6. | CREMODAN 719 | - 0.04 % | Stabilisator, Emulgator E 407 = Carrageen, E 412 = Guarkernmehl, E 415 = Xanthan |
| 7. | WP 920 | - 0.45 % | Stabilisator E 331 = Na-Citrat, E 340 = Kaliumorthophosphat, E 460 = Cellulose, E 466 = Carboxymethylcellulose |
| 8. | LACTEM P22 | - 0.50 % | Milchsäureester E 472b = Mono- und/oder Diglycerid von Speisefettsäuren, verestert mit Milchsäure |
| 9. | PANODAN 0165 DATEM | - 0.20 % | Mono- u. Diacetylweinester E 472e = Mono- und/oder Diglycerid von Speisefettsäuren, verestert mit Mono- und/oder Diacetylweinsäure |
| 10. | DIMODAN | - 0.20 % | Mono- u. Diglyceride von Speisefettsäuren = E 471 |
| 11. | VANILLA 3134 | - 0.02 % | Aroma |
| 12. | CREAM FLAVOURING 3030 | - 0.05 % | Aroma |
| 13. | WASSER | -69.40 % | |
| | | 100.00 % | |

Als Feuchthaltemittel eignen sich insbesondere Sorbit, 1,2-Propandiol, Glycerin.

Die Polydextrose fungiert als Füllstoff, d. h. bulking agent zur Verbesserung der Textur und des Geschmackseindrucks.

Die genannten Stoffe, wie Polawar 70, Cremodan 719, WP 920, Litesse 2 Polydextrose, Panodan 0165 Datem, Dimodan, Vanilla 3134, Cream Flavouring 3030 sind im Handel erhältlich und können beispielsweise von der Firma Danisco bezogen werden (Danisco, Edwin Rahrs Vej 38, DK-8220 Brabrand, Denmark).

Das Maltodextrin fungiert als partieller Fettersatzstoff zur Verbesserung der rheologischen und kalorischen Eigenschaften

Die Aromastoffe sind fakultativ und können ausgetauscht oder weggelassen werden.

Als beispielhafte Speisefettsäuren können Linolsäure, Linolensäure, Palmitinsäure, Ölsäure genannt werden.

### Beispiel 2

Die unter Beispiel 1 genannten Bestandteile werden zunächst in eine Fett-Phase und eine Wasser-Phase getrennt hergestellt. Bei der Fettphase wird zunächst das Fett auf näherungsweise 70°C erhitzt, woraufhin nacheinander der Mono- und/oder Di-Glycerid-Milchsäureester (E 472b) (Lactem P22), dann die Mono- und/oder Di-Glyceride von Speisefettsäuren (E 471) (Dimodan) sowie die Mono- und/oder Di-Glycerid-Mono- und Diacetyl-Weinsäureester (E 472e) (Panodan 165) zugegeben werden. Für die Wasserphase wird Wasser zunächst auf ca. 70°C erhitzt. Anschließend wird das Maltodextrin in vier gleiche Teile aufgeteilt, von denen einer mit Na-Caseinat, ein anderer mit der Stabilisatormischung WP 920, und wieder ein anderer mit der Stabilisatormischung Cremodan 719 vermischt wird, während der vierte Teil unverändert bleibt. Diese vier Teile werden in der Reihenfolge a) Maltodextrin, b) Maltodextrin und Na-Caseinat, c) Maltodextrin und WP 920, und d) Maltodextrin und Cremodan 719 langsam zu dem Wasser dazugegeben. Anschließend wird die Polydextrose,und darauf das Sorbit hinzugegeben.

Nachdem beide Phasen so hergestellt worden sind, werden sie unter intensivem Rühren für 5 Minuten miteinander vermischt, woraufhin anschließend noch möglicherweise Aromastoffe zugegeben werden können.

Das so erhaltene Produkt kann weiteren Verarbeitungsschritten, beispielsweise Sterilisierung, Homogenisierung, Ultrahocherhitzung, etc. unterzogen werden.

### Beispiel 3

Das in Beispiel 2 hergestellte Produkt eignet sich hervorragend als Sahneersatz für alle küchentechnischen Anwendungen, was folgende Daten belegen:
- schnelles Aufschlagen mit automatisierter Technik (bspw. Mixer, im Schlagkessel oder im Sahnesiphon) und per Hand
- enorm hohes Aufschlagvolumen (mindestens 100 % mehr als Sahne → dadurch Einsparung an Warenverbrauch und nochmals im Verhältnis zum Volumen gesehen
- nur ca. 170 kcal/100g im Gegensatz zu Schlagsahne, die ca. 293 kcal/100g aufweist
- ca. 25% der Kalorien, die das gleiche Volumen einer herkömmlichen Sahne hat
- sehr lange Standfestigkeit ohne zusätzliche Stoffe (z. B. "Sahnesteif")
- sahneanaloge Konsistenz und Geschmack
- flüssige Form im Originalzustand
- sehr gut geeignet zum Kochen und für Aufläufe (hitzebeständig)
- sehr gute Bindeeigenschaften beim Kochen
- cholesterinfrei, frei von Milchzucker
- keine tierischen Fette
- ohne Vorkühlung verwendbar
- Lagerung bei normaler Temperatur (+2 Grad Celsius bis + 20 Grad Celsius) möglich, bei entsprechender Sterilisierung für mehrere Wochen
- Leichte und luftige Konsistenz im aufgeschlagenen Zustand und trotzdem sehr standfest
- Besonders geeignet auch zur Verfeinerung des Geschmacks auf Kaffee, Kakao, Suppen

Eine Ausführungsform einer erfindungsgemäßen Zusammensetzung gemäß Beispiel 2 weist folgende Eigenschaften auf:

| | erfindungsgemäße Zusammensetzung | Sahne |
|---|---|---|
| Nährwertangaben | per 100 g | per 100 g |
| Brennwert: | 718 kJ/173 kcal | 1206kJ/293 kcal |
| Eiweiß: | 0,6 g | 2,36 g |
| Kohlenhydrate: | 9,0 g | 3,27 g |
| Fett: | 15,0 g | 30,0 g |

| | | |
|---|---|---|
| - gesättigte Fettsäuren | 12,7 g | 18,2 g |
| - einfach ungesättigte Fettsäuren | 2,3 g | 9,3 g |
| - mehrfach ungesättigte Fettsäuren | <0,2 g | 1,0 g |
| Cholesterin: | 0 mg | 109,0 mg |

Wie anhand der Tabelle gesehen werden kann, zeichnet sich die erfindungsgemäße Zusammensetzung unter anderem auch durch die Cholesterinfreiheit aus; im Gegensatz dazu hat normale Sahne, bezogen auf 100 g, 109,0 mg Cholesterin, und Kondensmilch mit 10% Fett 34 mg Cholesterin.

## Patentansprüche

1. Zusammensetzung, umfassend mindestens eine Sorte pflanzliches Fett, mindestens eine Polyhydroxyverbindung, mindestens einen Füllstoff, mindestens einen Stabilisator, mindestens ein Mittel zur Verbesserung der rheologischen und kalorischen Eigenschaften der Zusammensetzung, mindestens eine Sorte Eiweiß und mindestens eine Sorte Mono- und/oder Di-Glycerid sowie Wasser, wobei die mindestens eine Polyhydroxyverbindung ausgewählt ist aus der Gruppe, umfassend Sorbit, 1,2-Propandiol und Glycerin und wobei die Bestandteile in folgenden Gewichtsbereichsmengen vorliegen (Angaben in Gew.% der Gesamtzusammensetzung):
Pflanzliches Fett 10% - 20%
Eiweiß 0,1 % - 1 %
Polyhydroxyverbindung 0,1% - 2%
Mittel zur Verbesserung der rheologischen und kalorischen Eigenschaften 5% - 10%
Füllstoff 1 % - 8%
Stabilisator 0,01% - 1%
Mono- und/oder Di-Glycerid 0,1% - 2%
Wasser ad 100%.

2. Zusammensetzung nach Anspruch 1, **dadurch gekennzeichnet, daß** die mindestens eine Sorte pflanzliches Fett ausgewählt ist aus der Gruppe, umfassend Palmfett, Kokosfett und eine Kombination der beiden Fette.

3. Zusammensetzung nach einem der Ansprüche 1 - 2, **dadurch gekennzeichnet, daß** der mindestens eine Stabilisator ausgewählt ist aus der Gruppe, umfassend Carrageen, Guarkernmehl, Natriumcitrat, Kaliumorthophosphat, Cellulose, Carboxymethylcellulose und Xanthan.

4. Zusammensetzung nach einem der Ansprüche 1 - 3, **dadurch gekennzeichnet, daß** der mindestens eine Füllstoff ein Kohlenhydrat ist.

5. Zusammensetzung nach Anspruch 4, **dadurch gekennzeichnet, daß** das Kohlenhydrat eine Polydextrose ist.

6. Zusammensetzung nach einem der vorangehenden Ansprüche, **dadurch gekennzeichnet, daß** das mindestens eine Mittel zur Verbesserung der rheologischen und kalorische Eigenschaften der Zusammensetzung ausgewählt ist aus der Gruppe, umfassend Maltodextrin, Saccharosepolyester, Cellulose, insbesondere mikrokristalline Cellulose und mikropartikuliertes Protein.

7. Zusammensetzung nach einem der Ansprüche 1 - 6, **dadurch gekennzeichnet, daß** die mindestens eine Sorte Mono- und/oder Di-Glycerid ein Mono- und/oder Di-Glycerid von Speisefettsäuren, verestert mit Essigsäure, Milchsäure, Citronensäure, Weinsäure, Monoacetyl-Weinsäure und/oder Diacetyl-Weinsäure ist.

8. Zusammensetzung nach einem der Ansprüche 1 - 7, **dadurch gekennzeichnet, daß** die mindestens eine Sorte Eiweiß ausgewählt ist aus der Gruppe, die Milcheiweiß, Sojaeiweiß und eine Kombination der beiden Eiweiße umfaßt.

9. Zusammensetzung nach einem der vorangehenden Ansprüche, weiterhin umfassend mindestens einen Aromastoff.

10. Zusammensetzung nach Anspruch 1, **dadurch gekennzeichnet, daß** die Bestandteile in folgenden Gewichtsbereichsmengen vorliegen (Angaben in Gew.% der Gesamtzusammensetzung):
Pflanzliches Fett 12% - 18%
Eiweiß 0,4% - 0,9%
Polyhydroxyverbindung 0,5% - 1,5%
Mittel zur Verbesserung der rheologischen und kalorischen Eigenschaften 7% - 9%
Füllstoff 3% - 6%
Stabilisator 0,1% - 0,9%
Mono- und/oder Di-Glycerid 0,2% - 1,5%
Wasser ad 100%

11. Zusammensetzung nach einem der vorangehenden Ansprüche, **dadurch gekennzeichnet, daß** die mindestens eine Sorte pflanzliches Fett Palmfett ist, die mindestens eine Sorte Eiweiß Caseinat ist, die mindestens eine Polyhydroxyverbindung Sorbit ist, das mindestens eine Mittel zur Verbesserung der rheologischen und kalorischen Eigenschaften der Zusammensetzung Maltodextrin ist, der mindestens eine Füllstoff Polydextrose ist, der mindestens eine Stabilisator Carrageen, Guarkernmehl, Xanthan, Natriumcitrat, Kaliumorthophosphat, Cellulose und/oder Carboxymethylcellulose und/oder eine beliebige Kombination der vorgenannten Stoffe ist, die mindestens eine Sorte Mono- und/oder Di-Glycerid ein Mono- und/oder Di-Glycerid von Speisefettsäuren, verestert mit Essigsäure, Milchsäure, Citronensäure, Weinsäure, Monoacetyl-Weinsäure und/oder Diacetyl-Weinsäure ist.

12. Zusammensetzung nach Anspruch 11, **dadurch gekennzeichnet, daß** die Bestandteile in folgenden Gewichtsbereichsmengen vorliegen (Angaben in Gew.% der Gesamtzusammensetzung):
Palmfett 14% - 16%
Caseinat 0,6% - 0,8%
Sorbit 0,8% - 1,2%
Maltodextrin 7% - 9%
Polydextrose 3% - 5%
Stabilisator 0,02% - 0,6%
Mono- und/oder Di-Glycerid 0,7% - 1,5%
Wasser ad 100%

13. Verwendung einer Zusammensetzung nach einem der Ansprüche 1 - 12 als Sahneersatz.

14. Verwendung nach Anspruch 13, wobei die Zusammensetzung zum Verfeinern von Speisen und Soßen, zum Aufschäumen von Desserts, als Schlagsahneersatz, oder als Kaffeeweißer eingesetzt wird.

15. Verfahren zum Herstellen einer Zusammensetzung, insbesondere nach einem der Ansprüche 1 - 12, umfassend die folgenden Schritte:
- Bereitstellen von mindestens einer Sorte pflanzliches Fett, mindestens einer Polyhydroxyverbindung, mindestens einem Füllstoff, mindestens einem Stabilisator, mindestens einem Mittel zur Verbesserung der rheologischen und kalorischen Eigenschaften, mindestens einer Sorte Eiweiß, mindestens einer Sorte Mono- und/oder Diglycerid, sowie Wasser,
- Herstellen einer Fettphase durch Mischen des Fetts mit der mindestens einen Sorte Mono- und/oder Diglycerid,
- Herstellen einer Wasserphase durch Mischen von Wasser mit dem mindestens einen Mittel zur Verbesserung der rheologischen und kalorischen Eigenschaften, der mindestens einen Sorte Eiweiß, dem mindestens einen Stabilisator und mindestens einer Sorte Mono- und/oder Diglycerid, dem mindestens einen Füllstoff sowie der mindestens einen Polyhydroxyverbindung,
- Mischen der Fettphase und der Wasserphase;
**dadurch gekennzeichnet, daß** die mindestens eine Sorte pflanzliches Fett wie in Anspruch 2 definiert ist, die mindestens eine Polyhydroxyverbindung wie in Anspruch 1 definiert ist, weiterhin daß der mindestens eine Füllstoff wie in einem der Ansprüche 4 - 5 definiert ist, weiterhin daß der mindestens eine Stabilisator wie in Anspruch 3 definiert ist, weiterhin daß das mindestens eine Mittel zur Verbesserung der rheologischen und kalorischen Eigenschaften wie in Anspruch 6 definiert ist, weiterhin daß die mindestens eine Sorte Eiweiß wie in Anspruch 8 definiert ist und weiterhin daß die mindestens eine Sorte Mono-und/oder Diglycerid wie in Anspruch 7 definiert ist.

16. Verfahren nach Anspruch 15, **dadurch gekennzeichnet, daß** weiterhin Aromen zugegeben werden, die während der Herstellung der Fettphase, während der Herstellung der Wasserphase und/oder während der Mischung der Fettphase und der Wasserphase zugegeben werden.

17. Verfahren nach einem der Ansprüche 15 - 16, **dadurch gekennzeichnet, daß** das durch Mischen der Fettphase und der Wasserphase erhaltene Produkt weiteren Verarbeitungsschritten, wie Sterilisierung, Homogenisierung, Ultrahocherhitzung unterzogen wird.

18. Verfahren nach einem der Ansprüche 15 - 17, **dadurch gekennzeichnet, daß** vor Herstellung der Fettphase das Fett auf eine Temperatur im Bereich von 50 - 90°C, bevorzugt 60 - 80°C, besonders bevorzugt ca. 70°C erhitzt wird.

## Claims

1. Composition comprising at least one grade of vegetable fat, at least one polyhydroxy compound, at least one filler, at least one stabilizing agent, at least one agent for improvement of the rheological and caloric properties of the composition, at least one grade of protein and at least one grade of mono and/or di-glyceride as well as water, wherein said at least one polyhydroxy compound is selected from the group comprising sorbitol, 1,2-propandiol and glycerin and wherein the constituents are present in the following quantities in terms of weight ranges (given in wt-% based on the total composition):
Vegetable fat 10 % to 20 %
Protein 0.1 % to 1 %
Polyhydroxy compound 0.1 % to 2 %
Agent for improvement of the rheological and caloric properties 5 % to 10%
Filler 1 % to 8 %
Stabilizing agent 0.01 % to 1 %
Mono and/or di-glyceride 0.1 % to 2 %
Water up to 100 %.

2. Composition according to Claim 1, **characterised in that** said at least one grade of vegetable fat is selected from the group comprising palm oil, coconut oil and a combination of the two fats.

3. Composition according to any of the Claims 1 to 2, **characterised in that** said at least one stabilizing agent is selected from the group comprising carrageen, guar seed meal, sodium citrate, potassium orthophosphate, cellulose, carboxy-methyl cellulose and xanthan gum.

4. Composition according to any of the Claims 1 to 3, **characterised in that** said at least one filler is a carbohydrate.

5. Composition according to Claim 4, **characterised in that** said carbohydrate is a polydextrose.

6. Composition according to any of the preceding Claims, **characterised in that** said at least one agent for improvement of the rheological and caloric properties of the composition is selected from the group comprising maltodextrin, saccharose polyester, cellulose, in particular microcrystalline cellulose, and protein in micro particles.

7. Composition according to any of the Claims 1 to 6, **characterised in that** said at least one grade of mono and/or di-glyceride is a mono and/or diglyceride of dietary fatty acids esterified with acetic acid, lactic acid, citric acid, tartaric acid, mono-acetyl tartaric acid and/or diacetyl tartaric acid.

8. Composition according to any of the Claims 1 to 7, **characterised in that** said at least one grade of protein is selected from the group comprising milk protein, soy-bean protein and a combination of the two proteins.

9. Composition according to any of the preceding Claims, comprising furthermore at least one aromatic substance.

10. Composition according to Claim 1, **characterised in that** said constituents are present in the following quantities in terms of weight ranges (given in wt-% based on the total composition):
Vegetable fat 12 % to 18 %
Protein 0.4 % to 0.9 %
Polyhydroxy compound 0.5 % to 1.5 %
Agent for improvement of the rheological and caloric properties 7 % to 9%
Filler 3 % to 6 %
Stabilizing agent 0. 1 % to 0.9 %
Mono and/or di-glyceride 0.2 % to 1.5 %
Water up to 100 %.

11. Composition according to any of the preceding Claims, **characterised in that** said at least one grade of vegetable fat is palm oil, said at least one grade of protein is caseinate, said at least one polyhydroxy compound is sorbitol, said at least one agent for improvement of the rheological and caloric properties of the composition is maltodextrin, said at least one filler is polydextrose, said at least one stabilizing agent is carrageen, guar seed meal, xanthan gum, sodium citrate, potassium orthophosphate, cellulose and/or carboxy methyl cellulose and/or any combination whatsoever of the aforementioned substances, said at least one grade of mono and/or di-glyceride is a mono and/or di-glyceride of dietary fatty acids, esterified with acetic acid, lactic acid, citric acid, tartaric acid, mono acetyl tartaric acid and/or diacetyl tartaric acid.

12. Composition according to Claims 11, **characterised in that** said constituents are present in the following quantities in terms of weight ranges (given in wt-% based on the total composition):
Palm oil 14 % to 16 %
Caseinate 0.6 % to 0.8 %
Sorbitol 0.8 % to 1.2 %
Maltodextrin 7 % to 9 %
Polydextrose 3 % to 5 %
Stabilizing agent 0.02 % to 0.6 %
Mono and/or di-glyceride 0.7 % to 1.5 %
Water up to 100 %.

13. Use of a composition according to any of the Claims 1 to 12 as substitute for cream.

14. Use according to Claim 13, with the composition being employed for refining food and sauces, for foaming desserts, as substitute for cream or a coffee whitener.

15. Method of producing a composition, in particular according to any of the Claims 1 to 12, comprising the following steps:
- providing at least one grade of vegetable fat, at least one polyhydroxy compound, at least one filler, at least one stabilizing agent, at least one agent for improvement of the rheological and caloric properties, at least one grade of protein, at least one grade of mono and/or di-glyceride, as well as water
- producing a fatty phase by mixing the fat with at least one grade of mono and/or di-glyceride,
- producing an aqueous phase by mixing water with at least one agent for improvement of the rheological and caloric properties, at least one grade of protein, said at least one stabilizing agent and at least one grade of mono and/or di-glyceride, said at least one filler as well as said at least one polyhydroxy compound,
- mixing said fatty phase and said aqueous phase;
**characterised in that** said at least one grade of vegetable fat is defined as it is defined in Claim 2, said at least one polyhydroxy compound is defined as it is defined in Claim 1, furthermore that said at least one filler is defined as it is defined in any of the Claims 4 to 5, furthermore that said at least one stabilizing agent is defined as it is defined in Claim 3, furthermore that said at least one agent for improvement of the rheological and caloric properties is defined as it is defined in Claim 6, furthermore that said at least one grade of protein is defined as it is defined in Claim 6, furthermore that said at least one grade of protein is defined as it is defined in Claim 8, and furthermore that said at least one grade of mono and/or di-glyceride is defined as it is defined in Claim 7.

16. Method according to Claim 15, **characterised in that** furthermore aroma substances are added which are added during the production of said fatty phase, during the production of said aqueous phase and/or during the step of mixing said fatty phase and said aqueous phase.

17. Method according to any of the Claims 15 to 16, **characterised in that** the product obtained by mixing said fatty phase and said aqueous phase is subjected to further processing steps such as sterilization, homogenization and heating at ultra-high temperatures.

18. Method according to any of the Claims 15 to 17, **characterised in that** prior to the production of said fatty phase, the fat is heated to a temperature within the range from 50 to 90 °C, preferably 60 to 80 °C and particularly preferably of roughly 70 °C.

## Revendications

1. Composition, comprenant au moins une variété de matière grasse végétale, au moins un composé polyhydroxy, au moins une matière de charge, au moins un stabilisant, au moins un agent pour l'amélioration des propriétés rhéologiques et thermiques de la composition, au moins une variété de protéine et au moins une variété de monoglycéride et/ou de diglycéride ainsi que de l'eau, le au moins un composé polyhydroxy étant sélectionné dans le groupe comprenant le sorbitol, le 1,2-propanediol et la glycérine et les constituants étant présents dans les plages de poids suivantes (indications en % en poids de la composition totale) :
- matière grasse végétale 10 % à 20 %
- protéine 0,1 % à 1 %
- composé polyhydroxy 0,1 % à 2 %
- agent d'amélioration des propriétés rhéologiques et thermiques 5 % à 10 %
- matière de charge 1 % à 8 %
- stabilisant 0,01 % à 1 %
- monoglycéride et/ou diglycéride 0,1 % à 2 %
- eau jusqu'à obtenir 100 %.

2. Composition selon la revendication 1, **caractérisée en ce que** la au moins une variété de matière grasse végétale est sélectionnée dans le groupe comprenant l'huile de palme, l'huile de coco et une combinaison des deux matières grasses.

3. Composition selon l'une des revendications 1 à 2, **caractérisée en ce que** le au moins un stabilisant est sélectionné dans le groupe comprenant la carraghénane, la farine de guar, le citrate de sodium, l'orthophosphate de potassium, la cellulose, la carboxyméthylcellulose et le xanthane.

4. Composition selon l'une quelconque des revendications 1 à 3, **caractérisée en ce que** la au moins une matière de charge est un hydrate de carbone.

5. Composition selon la revendication 4, **caractérisé en ce que** l'hydrate de carbone est un polydextrose.

6. Composition selon l'une quelconque des revendications précédentes, **caractérisée en ce que** le au moins un agent pour l'amélioration des propriétés rhéologiques et thermiques de la composition est sélectionné dans le groupe comprenant la maltodextrine, le polyester de saccharose, la cellulose, en particulier la cellulose microcristalline et une protéine microparticulée.

7. Composition selon l'une quelconque des revendications 1 à 6, **caractérisée en ce que** la au moins une variété de monoglycéride et/ou de diglycéride est un monoglycéride et/ou un diglycéride d'acide gras alimentaire, estérifié par de l'acide acétique, de l'acide lactique, de l'acide citrique, de l'acide tartrique, de l'acide monoacétyltartrique et/ou de l'acide diacétyltartrique.

8. Composition selon l'une quelconque des revendications 1 à 7, **caractérisée en ce que** la au moins une variété de protéine est sélectionnée dans le groupe comprenant la protéine de lait, la protéine de soja et une combinaison des deux protéines.

9. Composition selon l'une quelconque des revendications précédentes, comprenant en outre au moins un aromatisant.

10. Composition selon la revendication 1, **caractérisée en ce que** les constituants sont présents dans les plages de poids suivantes (indications en % en poids de la composition totale) :
- matière grasse végétale 12 % à 18 %
- protéine 0,4 % à 0,9 %
- composé polyhydroxy 0,5 % à 1,5 %
- agent pour l'amélioration des propriétés rhéologiques et thermiques 7 % à 9 %
- matière de charge 3 % à 6 %
- stabilisant 0,1 % à 0,9 %
- monoglycéride et/ou diglycéride 0,2 % à 1,5 %
- eau jusqu'à obtenir 100 %.

11. Composition selon l'une quelconque des revendications précédentes, **caractérisée en ce que** la au moins une variété de matière grasse végétale est de l'huile de palme, la au moins une variété de protéine est du caséinate, le au moins un composé polyhydroxy est du sorbitol, le au moins un agent pour l'amélioration des propriétés rhéologiques et thermiques de la composition est de la maltodextrine, la au moins une matière de charge est du polydextrose, le au moins un stabilisant est du carraghénane, de la farine de guar, du xanthane, du citrate de sodium, de l'orthophosphate de potassium, de la cellulose et/ou de la carboxyméthylcellulose et/ou une combinaison quelconque des substances précitées, la au moins une variété de monoglycéride et/ou de diglycéride est un monoglycéride et/ou un diglycéride d'acide gras alimentaire, estérifié par de l'acide acétique, de l'acide lactique, de l'acide citrique, de l'acide tartrique, de l'acide monoacétyltartrique et/ou de l'acide diacétyltartrique.

12. Composition selon la revendication 11, **caractérisé en ce que** les constituants sont présents dans les plages de poids suivantes (indications en % en poids de la composition totale) :
- huile de palme 14 % à 16 %
- caséinate 0,6 % à 0,8 %
- sorbitol 0,8 % à 1,2 %
- maltodextrine 7 % à 9 %
- polydextrose 3 % à 5 %
- stabilisant 0,02 % à 0,6 %
- monoglycéride et/ou diglycéride 0,7 % à 1,5 %
- eau jusqu'à obtenir 100 %

13. Utilisation d'une composition selon l'une quelconque des revendications 1 à 12 en tant que succédané de crème.

14. Utilisation selon la revendication 13, la composition étant utilisée pour l'affinage d'aliments et de sauces, pour le moussage de desserts, en tant que succédané de crème fouettée, ou en tant que lait concentré pour le café.

15. Procédé de préparation d'une composition, en particulier selon l'une quelconque des revendications 1 à 12, comprenant les étapes suivantes consistant à :
- fournir au moins une variété de matière grasse végétale, au moins un composé polyhydroxy, au moins une matière de charge, au moins un stabilisant, au moins un agent pour l'amélioration des propriétés rhéologiques et thermiques, au moins une variété de protéine, au moins une variété de monoglycéride et/ou de diglycéride, ainsi que de l'eau,
- préparer une phase grasse par mélange de la matière grasse avec la au moins une variété de monoglycéride et/ou de diglycéride,
- préparer une phase aqueuse par mélange d'eau avec le au moins un agent pour l'amélioration des propriétés rhéologiques et thermiques, la au moins une variété de protéine, le au moins un stabilisant et la au moins une variété de monoglycéride et/ou de diglycéride, la au moins une matière de charge ainsi que le au moins un composé polyhydroxy,
- mélanger la phase grasse et la phase aqueuse ;
**caractérisé en ce que** la au moins une variété de matière grasse végétale est définie comme dans la revendication 2, le au moins un composé polyhydroxy est défini tel que dans la revendication 1, la au moins une matière de charge est en outre définie comme dans l'une quelconque des revendications 4 à 5, le au moins un stabilisant est en outre défini comme dans la revendication 3, le au moins un agent pour l'amélioration des propriétés rhéologiques et thermiques est en outre défini comme dans la revendication 6, la au moins une variété de protéine est en outre définie comme dans la revendication 8 et la au moins une variété de monoglycéride et/ou de diglycéride est en outre définie comme dans la revendication 7.

16. Procédé selon la revendication 15, **caractérisé en ce que** des aromes sont en outre ajoutés, qui sont ajoutés pendant la préparation de la phase grasse, pendant la préparation de la phase aqueuse et/ou pendant le mélange de la phase grasse et de la phase aqueuse.

17. Procédé selon l'une quelconque des revendications 15 à 16, **caractérisé en ce que** le produit obtenu par mélange de la phase grasse et de la phase aqueuse est soumis à d'autres étapes de transformation, comme une stérilisation, une homogénéisation, une upérisation

18. Procédé selon l'une quelconque des revendications 15 à 17, **caractérisé en ce que** la matière grasse est chauffée avant la préparation de la phase grasse à une température dans la plage de 50 à 90°C, de manière préférée de 60 à 80°C, de manière particulièrement préférée à environ 70°C.
